# EUROPÄISCHE PATENTSCHRIFT

(11) **EP 0 543 184 B1**
(45) Veröffentlichungstag und Bekanntmachung des Hinweises auf die Patenterteilung: **26.02.1997**
(21) Anmeldenummer: 92118308.3
(22) Anmeldetag: 27.10.1992
(51) Int. Cl.: C09J 7/02, C09J 133/08

(54) **Transferklebeband**
Adhesive transfer tape
Ruban de transfert adhésif

(30) Priorität: 18.11.1991 DE 4137936
(43) Veröffentlichungstag der Anmeldung: 26.05.1993
(73) Patentinhaber: Pritt Produktionsgesellschaft mbH, 30453 Hannover (DE)
(72) Erfinder: Mecke, Norbert, Dr., W-3000 Hannover 91 (DE); Titze, Lothar, W-3162 Ütze/Dollbergen (DE)
(74) Vertreter: Mathes, Nikolaus

(56) Entgegenhaltungen:
- EP-A- 0 063 898
- EP-A- 0 279 118
- DE-A- 2 225 618
- FR-A- 2 066 228

## Beschreibung

Die Erfindung betrifft ein Transferklebeband mit einem Träger und einem ablösbaren Film eines druckempfindlichen Klebstoffs auf Acrylatbasis, ein zu dessen Herstellung besonders geeignetes Verfahren sowie seine Verwendung in einem Handgerät.

Transferklebebänder obiger Art sind erhältlich und werden unter anderem mit einem Gerät zum Auftragen eines Klebstoffilms auf ein Substrat angeboten. Ein geeignetes Gerät hierfür wird in der EP 0 267 396 beschrieben. Dieses Gerät weist ein Gehäuse auf, in dem eine Vorratsspule für ein mit einem Klebstoffilm beschichtetes Trägerband, eine Aufwickelhaspel zur Aufnahme des vom Klebstoffilm getrennten Trägerbandes und eine das Band umlenkende Auftragseinrichtung angeordnet sind, die aus dem Gehäuse herausragt und die mit dem Klebstoffilm beschichtete Seite des Trägerbandes der Außenseite des Gerätes und somit dem Substrat darbietet. Zwischen Vorratsspule und Aufwickelhaspel ist eine Antriebsverbindung angebracht, die die Leerspule beim Antrieb der Vorratsspule durch Abziehen des Trägerbandes mit einer solchen Drehzahl antreibt, daß das Trägerband stets gespannt bleibt. Auf diese Weise wird der Klebstoffilm vom Trägerband abgelöst und auf das Substrat übertragen. Auf diese klebstoffbeschichtete Oberfläche kann dann ein weiteres Substrat aufgeklebt werden. Je nach der Art des Klebstoffilms bzw. seiner chemischen Zusammensetzung kann es sich hier um eine dauerhafte Verklebung oder auch um eine solche handeln, die aufgrund geringer Adhäsionskräfte wieder behoben werden kann.

Bei der oben beschriebenen Technologie des Auftrags eines Klebstoffilms anhand des beschriebenen Gerätes hat es sich gezeigt, daß der wünschenswerte glatte Abriß des Klebstoffilms nicht stets erzielt wird. So kommt es häufig zu einem störenden Fadenziehen. Geeignete Problemlösungen wurden hierzu bisher noch nicht angeboten. Dies geschieht beispielsweise auch nicht durch die Angaben der DE-PS 22 25 618. Viellmehr wird das angesprochene Problem dadurch umgangen, daß von einem zusammenhängenden Klebstoffilm auf dem Trägerband abgesehen und die Klebstoffbeschichtung im wesentlichen in nicht zusammenhängende Klebstoffsegmente unterteilt wird. Auf diese Weise wird das Abreißen ausgeschlossen und damit das angesprochene Problem vermieden.

In der DE 20 51 688 wird ein klebendes Produkt beschrieben, das eine biegsame Unterlage mit einer darauf befindlichen Schicht aus Klebemittel umfaßt. Diese Schicht enthält feste Mikroteilchen aus einem organischen Polymerisat, welches mit dem Klebemittel physikalisch unverträglich ist und einen Schmelzpunkt von wenigstens 105 °C hat. Die Mikroteilchen sollen vorzugsweise größer als die Dicke der Klebemittelschicht sein und eine Größe von 250 bis 0,1 Mikrometern aufweisen.

Der Erfindung lag die Aufgabe zugrunde, das eingangs beschriebene Klebeband so weiterzubilden, daß stets ein sauberer Abriß des Klebstoffilms erreicht wird, wenn das Transferklebeband beispielsweise in einem Gerät der vorstehend beschriebenen Art eingesetzt wird.

Erfindungsgemäß wird diese Aufgabe dadurch gelöst, daß der Film des druckempfindlichen Klebstoffs feinverteilte Alginsäure enthält.

Der Träger des erfindungsgemäßen Transferklebebandes besteht vorzugsweise aus einer Kunststoffolie, wie sie bei Trägern von Schreibmaschinenbändern herangezogen wird, so z.B. aus Polyethylenterephthalat, Polypropylen, Polyethylen, Polyvinylchlorid oder Polycarbonat. Gegebenenfalls kann eine derartige Kunststoffolie ein- oder beidseitig eine Silikonschicht aufweisen, um die Haftung zwischen dem Klebstoffilm und dem Träger herabzusetzen. Als Träger hat sich auch ein silikonbeschichtetes Papier als geeignet erwiesen. Die Silikonbeschichtung führt auch hier zu einer Verringerung der Haft spannung zwischen dem Träger und dem Klebstoffilm. Sie kann allerdings auch durch andere Antihaftmittel ersetzt werden, wie beispielsweise durch Polytetrafluorethylen.

Der Träger hat vorzugsweise eine Stärke von 10 bis 60 Mikrometern, insbesondere von 15 bis 55 Mikrometern, während die Klebstoffschicht vorzugsweise eine Stärke von 5 bis 40 Mikrometern, insbesondere von 15 bis 25 Mikrometern aufweist. Der Klebstoffilm des erfindungsgemäßen Transferklebebandes beruht auf Acrylatbasis. Dieser Begriff ist weitestgehend zu verstehen. So kann es sich um ein Polyacrylat, ein Polymethacrylat aber auch um geeignete Acrylat- bzw. Methacrylat-Copolymere handeln. Derartige Erzeugnisse werden beispielsweise in Römpps Chemie-Lexikon, Bd. 5, S. 3274 beschrieben, nämlich Polyacrylate, Polymethacrylate, Copolymerisate aus Acryl- und Methacrylestern, wie beispielsweise mit Styrol, Vinylchlorid, Vinylacetat, Acrylnitril. Auch Copolymere auf Acrylat/Methacrylat-Basis sind geeignet. Bevorzugt werden als Acrylat-Materialien Copolymerisate aus Methacrylsäuremethylester mit Acrylsäurebutylester. Grundsätzlich handelt es sich bei diesen Klebstoffen um elastische und dauernd klebefähige Selbstklebemassen mit großen Adhäsionskräften, die bereits unter geringem Druck bei Raumtemperatur auf den verschiedenen Substratoberflächen sofort haften.

In Einzelfällen ist es von Vorteil, auf dem Träger des erfindungsgemäßen Transferklebebandes zwei oder mehr Klebstoffschichten auszubilden, die unterschiedliche Adhäsionseigenschaften aufweisen. So kann beispielsweise die untere Schicht solche Adhäsionskräfte aufweisen, so daß sie dauerhaft auf dem Substrat klebt, während die obere Schicht eine geringere Adhäsionskraft zeigt, so daß ein darauf aufgebrachtes Substrat, wenn gewünscht, wieder abgelöst werden kann. Dabei kann sich die Alginsäure entweder in einer Klebstoffschicht oder in beiden Klebstoffschichten befinden.

Dem Klebstoffilm des erfindungsgemäßen Transferklebebandes können auch eigenschaftsverbesserende Additive zugegeben werden, wie insbesondere Konservierungsmittel. Darüber hinaus ist ein Einfärben der Klebstoffilme mit Farbmitteln möglich. Dies kann durch Farbstoffe und/oder Farbpigmente erfolgen, wobei letztere auch Kunststoffcharakter haben können.

Ein besonders geeignetes Verfahren zur Herstellung des erfindungsgemäßen Transferklebebandes ist dadurch gekennzeichnet, daß eine wäßrige Dispersion eines Klebstoffs auf Acrylatbasis mit einem in Wasser gelösten Alginat versetzt und die erhaltene wäßrige Mischung unter Rühren sauer eingestellt wird, um die Alginsäure in feiner Verteilung auszufällen, die so erhaltene Klebstoffdipersion in üblicher Weise auf einen flexiblen Träger aufgetragen und der wäßrige Anteil abgedampft wird. Als Alginate kommen insbesondere Natrium- und Kaliumalginate in Frage. In die angesprochene Klebstoffdispersion wird vorzugsweise soviel Alginat zugegeben, daß in dem fertigen Klebstoffilm 0,5 bis 10 Gew.-% Alginsäure, vorzugsweise 1 bis 5 Gew.-% vorliegen.

Das Sauereinstellen kann beispielsweise erfolgen mit Salzsäure, Schwefelsäure und dergleichen. Während des Sauereinstellens auf einen pH-Wert von 2 bis 3, wodurch das Alginat in die Alginsäure überführt wird, wird vorzugsweise mit einem Rührer, wie beispielsweise eine Flügelrührer und dergleichen, gerührt, um eine feinste Dispersion der Alginsäure in der wäßrigen Klebstoffdispersion zu erzielen. Je feiner die Verteilung ist, desto besser ist der angestrebte Effekt des gewünschten randscharfen Abrißes. Das Abdampfen des Wassers kann durch Überleiten von lufterhöhter Temperatur erfolgen, beispielsweise von etwa 100^{o}C.

Der Alginsäure enthaltenden wäßrigen Klebstoffdispersion, die zur Ausbildung des Klebstoffilms auf dem Träger dient, wird vorzugsweise in einer Menge von 10 bis 80 g/m², insbesondere von 20 bis 30 g/m², bezogen auf Trockensubstanz, auf den Träger aufgetragen. Um den Beschichtungsvorgang zu optimieren, können der wäßrigen Klebstoffdispersion Beschichtungshilfsmittel einverleibt werden, wie beispielsweise Netzmittel, insbesondere nicht-ionogene Netzmittel, wie ethoxylierte Nonylphenole. Andererseits können der Dispersion auch Additive einverleibt werden, die der fertigen Klebstoffschicht zusätzliche wünschenswerte Eigenschaften verleihen. Dabei kann es sich beispielsweise um die bereits angesprochenen Konservierungsmittel handeln.

Technologisch läßt sich das erfindungsgemäße Transferklebeband wie folgt erläutern: Wesentlicher Bestandteil des Klebstoffilms ist die Alginsäure. Nur unter deren Einverleibung ist es gewährleistet, daß beim Auftragen des Klebstoffilms auf ein Substrat unter Zugspannungsbedingungen ein sauberer Abriß erfolgt. Beim Substrat kann es sich handeln um Glas, Holz, metallische Oberflächen und dergleichen. Vermutlich geht die angesprochene Hilfsfunktion der Alginsäure darauf zurück, daß der Klebstoffilm perforiert wird, was den gewünschten randscharfen Abriß erleichtert. Überraschen muß dabei, daß eine Perforierung durch andere körnige Füllstoffe nicht gleichermaßen wirksam ist.

Bei der Verwendung des erfindungsgemäßen Transferklebebandes erfolgt dies vorzugsweise in aufgerollter Form, so daß man hierfür übliche Auftragsgeräte heranziehen kann, wie sie beispielsweise eingangs beschrieben worden sind, um hier ein Abrollen des mit dem Klebstoffilm versehenen Transferklebebandes bei gleichzeitigem Einzug des Trägers zu ermöglichen. Dies führt zu seiner besonders leichten Handhabung. Als besonders geeignet hat sich dabei ein sogenannter "Handroller" erwiesen, wie er beispielsweise auch eingangs beschrieben wurde. Bei einem derartigen Handroller ist vorzugsweise innerhalb eines griffgünstig gestalteten Gehäuses eine Vorratsspule mit dem Transferklebeband vorgesehen, von der aus es über einen aus dem Gehäuse vorstehenden Auftragsfuß geführt und von diesem wieder auf eine Aufwickelspule in das Gehäuse zurückgeleitet wird. Durch ein geeignetes Getriebe zwischen beiden Spulen im Gehäuse wird sichergestellt, daß das Transferklebeband stets ausreichend gespannt geführt wird. Der Benutzer nimmt zum Einsatz des Transferklebebandes das Gehäuse in seine Hand und drückt mittels des Auftragsfußes den über dessen Endkante laufenden äußeren (ablösbaren) Klebstoffilm gegen das jeweilige Substrat, auf das dieser aufgetragen werden soll. Währen des Andrückens bewegt der Benutzer das Gerät relativ zum Substrat und überträgt dabei auf dieses den Klebstoffilm. Hierbei wird der flexible Träger der Vorratsspule abgewickelt und auf die Aufwickelspule überführt.

Das erfindungsgemäße Transferklebeband zeichnet sich in besonderer Weise zum Einkleben von Fotos, Verkleben von Papier, Pappe, Holz sowie im Haushalts-, Büro- und Bastelbereich aus. Daneben bestehen noch vielfältige weitere Anwendungsmöglichkeiten.

Die Erfindung soll nachfolgend anhand von zwei Beispielen näher erläutert werden:

### Beispiel 1

97 g einer etwa 60%igen wäßrigen Klebstoffdispersion auf der Basis von Copolymerisaten von Acrylsäurebutylester mit Methacrylsäuremethylester im Verhältnis von 40:1 wurden mit 1 g Alginat (geliefert von der Firma Grinstedt), gelöst in 10 g Wasser, sowie 3 g Ethylan BCP (Netzmittel der Firma Macros). Die erhaltene Mischung wurde unter Rühren mit einem Flügelrührer unter Zugabe 20%iger Zitronensäurelösung auf einen pH-Wert von 3 eingestellt. Hierdurch fällt die Alginsäure in feiner Verteilung aus. Die auf diese Weise erhaltene Klebstoffdispersion wurde mit einer Rakel in einer Menge von 40 g/m² auf einen silikonisierten Papierträger einer Stärke von 40 Mikrometern aufgetragen. Dann wurde der wäßrige Anteil bei etwa 100°C durch Uberleiten von Heißluft abgedampft. Das Auftragen des Klebstoffilms auf Papier erfolgte mittels eines im Handel erhältlichen Handrollers. Dies führte zu einer randscharfen Übertragung des Klebstoffilms.

### Beispiel 2

Das Beispiel 1 wurde dahingehend abgewandelt, daß die nach Beispiel 1 erhaltene wäßrige Klebstoffdispersion auf einen silikonisierten Papierträger einer Stärke von 30 Mikrometern aufgetragen wurde, der zuvor mit einer Schicht bestehend aus 5 g/m² eines Polymerisats aus carboxyliertem Ethylhexylacrylat vorbeschichtet worden war. Auf diese Weise wurde ein Klebstoffilm, der wieder ablösbar war, erhalten. Hiermit ließen sich Haftklebeetiketten herstellen.

## Patentansprüche

1. Transferklebeband mit einem Träger und einem ablösbaren Film eines druckempfindlichen Klebstoffs auf Acrylatbasis, dadurch gekennzeichnet, daß der Film des druckempfindlichen Klebstoffs feinverteilte Alginsäure enthält.

2. Transferklebeband nach Anspruch 1, dadurch gekennzeichnet, daß die Alginsäure in dem Klebstoffilm in einer Menge von 0,5 bis 10 Gew.-% enthalten ist.

3. Transferklebeband nach Anspruch 2, dadurch gekennzeichnet, daß die Menge an Alginsäure 1 bis 5 Gew.-% beträgt.

4. Transferklebeband nach mindestens einem der Ansprüche 1 bis 3, dadurch gekennzeichnet, daß der Träger aus einer Kunststoffolie oder einem silikonbeschichteten Papier besteht.

5. Transferklebeband nach Anspruch 4, dadurch gekennzeichnet, daß die Kunststoffolie silikonbeschichtet ist.

6. Transferklebeband nach mindestens einem der vorhergehenden Ansprüche, dadurch gekennzeichnet, daß der Klebstoffilm aus zwei klebenden Schichten besteht, die an ihrer Oberfläche unterschiedliche Adhäsionskräfte aufweisen.

7. Transferklebeband nach mindestens einem der vorhergehenden Ansprüche, dadurch gekennzeichnet, daß der Klebstoffilm Konservierungsmittel enthält.

8. Verfahren zur Herstellung eines Transferklebebandes nach mindestens einem der vorhergehenden Ansprüche, dadurch gekennzeichnet, daß eine wäßrige Dispersion eines Klebstoffs auf Acrylatbasis mit einem in Wasser gelösten Alginat versetzt und die erhaltene wäßrige Mischung unter Rühren sauer eingestellt wird, um die Alginsäure in feiner Verteilung auszufällen, die so erhaltene Klebstoffdispersion in üblicher Weise auf einen flexiblen Träger aufgetragen und der wäßrige Anteil abgedampft wird.

9. Verfahren nach Anspruch 8, dadurch gekennzeichnet, daß der Klebstoffdispersion so viel Alginat in einer Menge zugeführt werden, daß nach Abdampfen des wäßrigen Anteils in dem Klebstoffilm 0,5 bis 10 Gew.-% Alginsäure vorliegen.

10. Verfahren nach Anspruch 8 oder 9, dadurch gekennzeichnet, daß zu der wäßrigen Klebstoffdispersion Beschichtungshilfsmittel hinzugegeben werden.

11. Verfahren nach Anspruch 10, dadurch gekennzeichnet, daß Beschichtungshilfsmittel in Form von Netzmitteln und/oder Entschäumern verwendet werden.

12. Verfahren nach mindestens einem der Ansprüche 8 bis 11, dadurch gekennzeichnet, daß der Klebstoffdispersion Farbmittel zugefügt werden.

13. Verwendung des Transferklebebandes nach mindestens einem der Ansprüche 1 bis 7 in aufgerollter Form in einem Handgerät.

## Claims

1. A transfer adhesive tape comprising a support and a removable film of an acrylate-based pressure-sensitive adhesive, characterized in that the film of the pressure-sensitive adhesive contains finely divided alginic acid.

2. A transfer adhesive tape as claimed in claim 1, characterized in that the alginic acid is present in the adhesive film in a quantity of 0.5 to 10% by weight.

3. A transfer adhesive tape as claimed in claim 2, characterized in that the quantity of alginic acid is from 1 to 5% by weight.

4. A transfer adhesive tape as claimed in at least one of claims 1 to 3, characterized in that the support consists of a plastic film or a silicone-coated paper.

5. A transfer adhesive tape as claimed in claim 4, characterized in that the plastic film is silicone-coated.

6. A transfer adhesive tape as claimed in at least one of the preceding claims, characterized in that the adhesive film consists of two adhesive layers which have different adhesion forces at their surfaces.

7. A transfer adhesive tape as claimed in at least one of the preceding claims, characterized in that the adhesive film contains preservative.

8. A method of making the transfer adhesive tape claimed in at least one of the preceding claims, characterized in that an alginate dissolved in water is added to an aqueous dispersion of an acrylate-based adhesive and the aqueous mixture obtained is acidified while stirring to precipitate the alginic acid in finely divided form, the resulting adhesive dispersion is applied in the usual way to a flexible support and the aqueous component is evaporated off.

9. A method as claimed in claim 8, characterized in that alginate is added to the adhesive dispersion in such a quantity that 0.5 to 10% by weight of alginic acid is present in the adhesive film after evaporation of the aqueous component.

10. A method as claimed in claim 8 or 9, characterized in that coating aids are added to the aqueous adhesive dispersion.

11. A method as claimed in claim 10, characterized in that coating aids in the form of wetting agents and/or defoamers are used.

12. A method as claimed in at least one of claims 8 to 11, characterized in that colourants are added to the adhesive dispersion.

13. The use of the transfer adhesive tape claimed in at least one of claims 1 to 7 in roll form in a hand-held applicator.

## Revendications

1. Ruban de transfert adhésif avec un support et un film détachable d'un adhésif sensible à la pression à base d'acrylate,
caractérisé en que
le film de l'adhésif sensible à la pression contient de l'acide alginique finement dispersé.

2. Ruban de transfert adhésif selon la revendication 1,
caractérisé en ce que
l'acide alginique est coûteux dans le film adhésif en une quantité de 0,5 à 10 % en poids.

3. Ruban de transfert adhésif selon la revendication 2,
caractérisé en ce que
la quantité d'acide alginique atteint 1 à 5 % en poids.

4. Ruban de transfert adhésif selon au moins une des revendications 1 à 3,
caractérisé en ce que
le support est composé d'une feuille de matière plastique ou d'un papier enduit de silicone.

5. Ruban de transfert adhésif selon la revendication 4,
caractérisé en ce que
la feuille de matière plastique est enduite de silicone.

6. Ruban de transfert adhésif selon au moins une des revendications précédentes,
caractérisé en ce que
le film d'adhésif se compose de deux couches collantes, qui comportent sur leur surface des forces d'adhérence différente.

7. Ruban de transfert adhésif selon une au moins des revendications précédentes,
caractérisé en ce que
le ruban adhésif contient des agents de conservation.

8. Procédé de préparation d'un ruban de transfert adhésif selon au moins une des revendications précédentes,
caractérisé en ce qu'
une dispersion aqueuse d'un adhésif à base d'acrylate est mélangée avec un alginate dissout dans de l'eau et le mélange aqueux obtenu est ajusté acide sous agitation pour faire précipiter l'acide alginique en fine répartition, la dispersion adhésive ainsi obtenue est appliquée de manière usuelle sur un support flexible et la proportion d'eau est éliminée par évaporation.

9. Procédé selon la revendication 8,
caractérisé en ce qu'
à la dispersion adhésive est amenée une grande quantité d'alginate telle, qu'après élimination par évaporation de la partie aqueuse il existe dans le film adhésif de 0,5 à 10 % en poids d'acide alginique.

10. Procédé selon les revendications 8 ou 9,
caractérisé en ce qu'
à la dispersion adhésive on ajoute en plus des adjuvants d'enduction.

11. Procédé selon la revendication 10,
caractérisé en ce qu'
on utilise des adjuvants d'enduction sous la forme d'agents mouillants et ou d'« antimousse ».

12. Procédé selon au moins une des revendications 8 à 11,
caractérisé en ce qu'
à la dispersion adhésive on ajoute des colorants.

13. Utilisation du ruban de transfert adhésif selon au moins une des revendication 1 à 7 sous la forme enroulée dans un appareil manuel.
